(19) **Europäisches Patentamt / European Patent Office / Office européen des brevets**

(11) **EP 3 571 162 B1**

(12) **FASCICULE DE BREVET EUROPEEN**

(45) Date de publication et mention de la délivrance du brevet:
**27.09.2023 Bulletin 2023/39**

(21) Numéro de dépôt: **18702778.4**

(22) Date de dépôt: **19.01.2018**

(51) Classification Internationale des Brevets (IPC):
*C01G 53/00* (2006.01)    *C01G 45/12* (2006.01)
*C01G 51/00* (2006.01)    *H01M 4/525* (2010.01)
*H01M 4/505* (2010.01)

(52) Classification Coopérative des Brevets (CPC):
**C01G 53/50; C01G 45/1228; C01G 51/42;**
**C01G 51/50; C01G 53/42; H01M 4/505;**
**H01M 4/525;** C01P 2002/50; C01P 2004/20;
C01P 2004/62; C01P 2004/64; C01P 2006/40;
Y02E 60/10

(86) Numéro de dépôt international:
**PCT/FR2018/050135**

(87) Numéro de publication internationale:
**WO 2018/134536 (26.07.2018 Gazette 2018/30)**

(54) **PROCEDE DE PREPARATION DE NANOPARTICULES NON AGGLOMEREES D'UN OXYDE LAMELLAIRE LITHIE**

VERFAHREN ZUR HERSTELLUNG VON NICHTAGGLOMERIERTEN NANOPARTIKELN AUF EINEM LITHIUMLAMELLENOXID

METHOD FOR PREPARING NON-AGGLOMERATED NANOPARTICLES OF A LITHIUM LAMELLAR OXIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.01.2017 FR 1750435**

(43) Date de publication de la demande:
**27.11.2019 Bulletin 2019/48**

(73) Titulaire: **Commissariat à l'Energie Atomique et aux Energies Alternatives
75015 Paris (FR)**

(72) Inventeurs:
- **PERALTA, David
  38000 Grenoble (FR)**
- **CABELGUEN, Pierre-Etienne
  38000 Grenoble (FR)**
- **FABRE, Frédéric
  38600 Fontaine (FR)**

(74) Mandataire: **Brevalex
Tour Trinity
1 B Place de la Défense
92400 Courbevoie (FR)**

(56) Documents cités:
WO-A1-2016/075533    FR-A1- 3 009 134
JP-A- 2003 068 300    US-A1- 2013 146 808

## Description

## DOMAINE TECHNIQUE

La présente invention a trait à un procédé de préparation de nanoparticules non agglomérées d'un oxyde lamellaire lithié et à des nanoparticules susceptibles d'être obtenues par ce procédé, lesquelles nanoparticules peuvent être, avantageusement utilisées comme matériau actif d'une électrode positive de batteries à haute énergie, et plus spécifiquement de batteries lithium-ion à haute énergie.

Les batteries lithium-ion sont particulièrement intéressantes pour les domaines où l'autonomie est un critère primordial, tels que cela est le cas du domaine des appareils nomades (tels que les téléphones portables, les ordinateurs portables) ou du domaine des transports tels que les véhicules électriques, les véhicules hybrides, ou encore des domaines médicaux, spatiaux ou de la microélectronique.

D'un point de vue fonctionnel, les batteries lithium-ion reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Dans les batteries lithium-ion, l'élément le plus critique et le plus limitatif s'avère être l'électrode positive et, plus spécifiquement, le matériau actif de l'électrode positive. En effet, ce sont les propriétés du matériau actif de l'électrode positive qui détermineront la densité d'énergie, la tension et la durée de vie de la batterie.

Afin d'augmenter la densité d'énergie, de nouveaux matériaux actifs d'électrode positive ont fait l'objet de recherche et, notamment des matériaux de la famille des oxydes lamellaires, tels que :

- les oxydes mixtes $Li(Ni,Co,Mn)O_2$ (et plus spécifiquement $Li(Ni_{1/3}Mn_{1/3}Co_{1/3})O_2$), ces oxydes étant connus également sous la dénomination NMC;
- les oxydes mixtes $Li(Ni, Co, Al)O_2$ (et plus spécifiquement $Li(Ni_{0,8}Co_{0,15}Al_{0,05}O_2)$), ces oxydes étant connus également sous la dénomination NCA.

Pour des raisons de mise en oeuvre de procédé, d'homogénéité du mélange lors de la synthèse et de densité de produit final, les matériaux de la famille des oxydes lamellaires sont réalisés par une synthèse en voie liquide et plus spécifiquement par coprécipitation, laquelle technique permet d'obtenir des agrégats de particules secondaires sphériques présentant une densité importante.

Plus précisément, la synthèse des matériaux de la famille des oxydes lamellaires implique deux étapes :

- une première étape de synthèse, en voie liquide, d'un précurseur carbonate ou hydroxyde contenant le ratio en métaux (hormis le lithium introduit subséquemment lors de la deuxième étape) souhaité pour l'oxyde final, à l'issue de laquelle il résulte des agrégats, généralement sphériques, de particules de plusieurs micromètres de diamètre ;
- une deuxième étape, au cours de laquelle le précurseur obtenu à la première étape est calciné en présence d'une source de lithium, laissant subsister la morphologie des agrégats obtenus à la première étape.

Les oxydes lamellaires ainsi obtenus se présentent sous la forme d'agrégats consistant en des particules secondaires de plusieurs micromètres de diamètre, lesdites particules secondaires résultant de l'agrégation de particules dites primaires, dont le diamètre est compris entre 10 et 400 nanomètres.

Les oxydes lamellaires présentant ce type de morphologie sont utilisés avantageusement pour entrer dans la constitution d'électrodes positives obtenues par enduction d'une encre comprenant lesdits oxydes sur un collecteur de courant. La forme et la taille des agrégats permet notamment d'améliorer l'arrangement des particules dans l'électrode et facilite également l'obtention d'une électrode positive présentant un grammage important.

Toutefois, l'émergence de nouvelles technologies de fabrication d'électrodes (en l'occurrence, autres que la fabrication par enduction) peut nécessiter l'utilisation des oxydes lamellaires sous une morphologie différente que celle d'agrégats de particules secondaires comme définis ci-dessus.

Par exemple, en utilisant une technologie de fabrication impliquant une étape d'impression, telle que l'impression 3D, de l'électrode positive, il pourrait s'avérer nécessaire de recourir à l'utilisation de particules nanométriques. En effet, en recourant à des agrégats de particules secondaires, il y a un risque non négligeable que la buse d'injection soit obstruée par lesdits agrégats et, qui plus est, la qualité d'impression sera moindre qu'avec des particules de tailles inférieures.

De même, dans les batteries dites « tout solide » (c'est-à-dire comprenant un électrolyte dépourvu de solvant aqueux ou organique), la viscosité de l'électrolyte (qui peut être un matériau inorganique, un matériau hybride organique-inorganique) est généralement trop élevée pour pouvoir pénétrer au coeur des agrégats de particules secondaires mentionnés ci-dessus, induisant un problème d'imprégnation avec l'électrolyte, ce qui peut engendrer une diminution des performances électrochimiques à régime élevé de charge/décharge. Aussi, afin de maximiser le contact entre l'électrolyte et les particules, l'utilisation de particules nanométriques pourrait permettre d'augmenter au maximum la surface de l'interface entre l'électrolyte et les particules.

Face à ces problématiques, certains auteurs ont mis en place des procédés de fabrication de nanoparticules d'oxyde lamellaire.

Ainsi, dans Materials Chemistry and Physics 134 (2012) 254-259, il est décrit la synthèse de nanoparticules de $LiNi_{1/3}Mn_{1/3}Co_{1/3}O_2$ par pyrolyse par pulvérisation à la flamme (technologie connue sous l'appellation « *Flame Spray Pyrolisis* »). Pour ce faire, il est préparé une solution alcoolique comprenant des composés organométallique de lithium, de nickel, de manganèse et de cobalt puis la solution ainsi obtenue est transformée en aérosol, lequel est passé à travers une flamme en vue d'être pyrolisé. Les poudres résultantes sont ensuite soumises à un traitement thermique de 700°C ou 800°C.

Les résultats montrent des particules présentant une taille allant de 51 à 101 nm.

Toutefois, l'utilisation de la technique de pyrolyse par pulvérisation à la flamme reste contraignante en termes de sécurité et les rendements obtenus sont relativement faibles par rapport à d'autres techniques en voie liquide, telles que la technique de coprécipitation évoquée ci-dessus.

Dans Journal of Power Sources, 163 (2007) 1053-1058, il est décrit un procédé de préparation de nanoparticules d'un oxyde lamellaire de formule $LiNi_{1/3}Mn_{1/3}Co_{1/3}O_2$ impliquant la mise en oeuvre de deux étapes :

- une étape de broyage, dans un broyeur planétaire, d'acétate de nickel, d'acétate de lithium, d'acétate de cobalt, d'acétate de manganèse et d'acide oxalique ;
- une étape de calcination du mélange résultant à différentes températures à 700°C, 800°C, 900°C et 950°C.

Avec ce procédé, il est observé, sur les clichés obtenus par microscopie à balayage électronique, que les particules nanométriques sont fortement agglomérées entre elles et donnent naissance à des particules secondaires de tailles micrométriques.

Enfin, dans Journal of Power Sources, 189, 2009, 248-255, il est fait état d'un procédé de préparation de particules nanométriques et submicroniques de différents oxydes lamellaires ($LiNi_{0,50}Mn_{0,50}O_2$, $LiNi_{0,33}Mn_{0,33}Co_{0,33}O_2$ et $LiNi_{0,40}Mn_{0,40}Co_{0,20}O_2$) réalisées par auto-combustion des nitrates métalliques (nitrate de lithium, nitrate de manganèse et, si besoin est, nitrate de cobalt) en présence de saccharose suivie d'une calcination à température élevée. Si les résultats obtenus sont satisfaisants, l'inconvénient majeur de cette technique réside dans l'utilisation des réactifs nitrates, qui sont très coûteux et donc difficilement utilisables à grande échelle dans le milieu industriel. De plus, la calcination des réactifs nitrates entraîne la formation de gaz toxiques et polluants, tels que des $NO_x$.

US2013146808, FR3009134 et WO2016075533 divulguent des procédés de préparation de hydroxydes mixtes et/ou de carbonates mixtes. Au regard de ce qui existe, les auteurs de la présente invention se sont donc fixé pour objectif de mettre au point un procédé de préparation de nanoparticules d'un oxyde lamellaire lithié spécifique, qui permette d'éviter un phénomène d'agglomération desdites nanoparticules et, ainsi, la formation de particules secondaires micrométriques.

## EXPOSÉ DE L'INVENTION

Les auteurs de la présente invention ont découvert qu'en mettant en oeuvre la technique de coprécipitation dans des conditions opératoires spécifiques, il est possible d'obtenir des nanoparticules d'oxyde lamellaire lithié non agglomérées.

Ainsi, l'invention a trait à un procédé de préparation de nanoparticules non agglomérées d'un oxyde lamellaire lithié comprenant un ou plusieurs éléments métalliques disposés sous forme de feuillets de cations métalliques (à savoir, des cations de Ni, Mn, Co, M au regard de la formule (I) ci-dessous) et du lithium disposé dans des interfeuillets de cations lithium et éventuellement, en partie, dans les feuillets de cations métalliques, lesdits interfeuillets assurant la séparation entre lesdits feuillets, ledit oxyde répondant à la formule (I) suivante :

$$Li_{(a+b)}Ni_cMn_dCo_eM_fO_g \qquad (I)$$

dans laquelle :

*a représente la proportion de lithium compris dans les interfeuillets et étant supérieur à 0 et inférieur ou égal à 1 ;
*b représente la proportion de lithium compris dans les feuillets de cations métalliques et étant supérieur ou égal à 0 et inférieur ou égal à (1/3) ;

\*c, d, e et f sont compris entre 0 et 1, avec la condition que b+c+d+e+f=1, de sorte à ce que l'électroneutralité de l'oxyde de formule (I) soit respectée (étant entendu que c, d, e et f ne peuvent pas être tous égaux à 0) ;

\*g est compris entre 1,9 et 2,1, par exemple, est égal à 2 ;

\*lorsque f est différent 0, M est au moins un élément choisi parmi Al, Fe, Ti, Cr, V, Cu, Mg, Zn, Na, K, Ca, Sc et les combinaisons de ceux-ci ;

ledit procédé comprenant les étapes suivantes :

a) une étape de synthèse d'un carbonate mixte ou d'un hydroxyde mixte comprenant les autres éléments que Li par mise en contact, sous agitation, des autres éléments que Li sous forme de cations avec des anions carbonates, lorsqu'il s'agit de synthétiser le carbonate mixte, ou avec des anions hydroxydes, lorsqu'il s'agit de synthétiser l'hydroxyde mixte ;

b) une étape de réaction du carbonate mixte ou de l'hydroxyde mixte obtenu à l'étape a) avec un carbonate de lithium ou hydroxyde de lithium, moyennant quoi il se forme l'oxyde lamellaire lithié de formule (I) susmentionnée,

caractérisé en ce que l'étape a) est réalisée à un pH prédéterminé, lequel pH va de 8 à 9,5 lorsque l'étape de synthèse concerne un carbonate mixte ou va de 11 à 12,5 lorsque l'étape de synthèse concerne un hydroxyde mixte et en ce que l'étape a) est réalisée à une vitesse d'agitation fixée de sorte à obtenir une puissance dissipée par unité de volume au moins supérieure ou égale à 1000 W/m$^3$.

La puissance dissipée par unité de volume peut être déterminée par l'homme du métier en s'appuyant sur des références de la littérature telles que Cognart et al. (Agitation, Mélange-Aspects mécaniques-Techniques de l'Ingénieur, Réf. J3804) ou Roustan et al. (Agitation, Mélange-Concepts Théoriques de base-Techniques de l'Ingénieur-Réf. J38000).

Plus spécifiquement, la puissance dissipée par unité de volume peut être déterminée par les opérations suivantes :

- une première opération consistant à déterminer le nombre de Reynolds Re à partir de l'équation suivante :

$$Re = \frac{N \times \rho \times d^2}{\eta}$$

dans laquelle Re représente le nombre de reynolds, N est la fréquence de rotation de l'agitateur (en s$^{-1}$), $\rho$ la masse volumique de la solution agitée (en kg/m$^3$), d le diamètre du mobile d'agitation (en m) et $\eta$ la viscosité dynamique de la solution agitée (en Pa.s) ;
- une deuxième opération consistant à déterminer le nombre de puissance N$_p$ à partir de la connaissance du nombre de Reynolds en fonction du régime d'écoulement et du type de pâle d'agitation, cette détermination du nombre de puissance étant accessible grâce à des abaques (que l'on peut trouver dans la référence « Agitation, Mélange-Caractéristiques des mobiles d'agitation-Techniques de l'ingénieur-Réf.J3802) ;
- une troisième opération consistant à déterminer la puissance dissipée par unité de volume à partir de l'équation suivante :

$$P_d = \frac{P}{V} = \frac{Np \times \rho \times N^3 \times d^5}{V}$$

dans laquelle Pd représente la puissance dissipée par unité de volume (en W/m$^3$), P la puissance nécessaire à l'entrainement de l'hélice (en W), V le volume du réacteur (en m$^3$), Np le nombre de puissance, $\rho$ la masse volumique de la solution agitée (en kg/m$^3$), N la fréquence de rotation de l'agitateur (en s$^{-1}$), d le diamètre du mobile d'agitation (en m).

Avant d'entrer plus en avant dans la description de cette invention, nous précisons les définitions suivantes.

Par nanoparticules, on entend, classiquement, des particules qui présentent, une, deux ou trois dimensions externes à l'échelle nanométrique, c'est-à-dire, dans le cadre de l'invention, une, deux ou trois dimensions externes inférieures ou égales à 400 nm, et plus spécifiquement allant de 10 à 400 nm. En particulier, les nanoparticules peuvent être des particules, qui présentent un diamètre moyen en nombre inférieur ou égal à 400 nm, plus spécifiquement allant de 10 à 400 nm, par exemple égal à 200 nm (tel qu'un diamètre moyen en nombre de 180 nm).

Le diamètre moyen en nombre peut être déterminé par diffraction dynamique de lumière, par spectroscopie acoustique ou par granulométrie laser, les valeurs obtenues pouvant être confirmées par ce qui est observé en microscopie électronique à balayage.

Par nanoparticules non agglomérées, on entend des particules libres, qui ne sont pas agglomérées ensemble pour former des agrégats de particules, générant ainsi des particules secondaires résultant de l'association desdites nanoparticules.

Selon l'invention, le choix d'une gamme de pH donné selon qu'il est préparé initialement un carbonate mixte et un hydroxyde mixte et le choix d'une vitesse d'agitation donnée relève d'un choix motivé pour aboutir à des nanoparticules non agglomérées d'un oxyde lamellaire lithié de formule (I) susmentionnée. Les auteurs ont notamment pu démontrer qu'en dehors de ces valeurs, il se produit un phénomène d'agglomération des particules nanométriques.

Selon un mode particulier de réalisation de l'invention, f peut être égal à 0, auquel cas l'oxyde lamellaire lithié répond à la formule (II) suivante :

$$Li_{(a+b)}Ni_cMn_dCo_eO_g \qquad (II)$$

avec a, b, c, d, e et g étant tels que définis ci-dessus.

Quant aux indices, b, c, d et e, ils répondront dans ce cas de figure à la relation b+c+d+e=1, de sorte à ce que le composé de formule (II) soit conforme au principe d'électroneutralité.

De manière plus spécifique, b et c sont supérieurs à 1, ce qui signifie en d'autres termes que Ni et Mn sont systématiquement présents dans l'oxyde lamellaire lithié.

Un oxyde spécifique conforme à la définition des oxydes de formule (II) susmentionnée est l'oxyde de formule (III) suivante avec b=0 :

$$LiNi_{1/3}Mn_{1/3}Co_{1/3}O_2 \qquad (III)$$

Selon un autre mode particulier de réalisation de l'invention, f peut être égal à 0 et e peut être égal à 0, auquel cas l'oxyde lamellaire lithié répond à la formule (IV) suivante :

$$Li_{(a+b)}Ni_cMn_dO_g \qquad (IV)$$

avec a, b, c, d et g étant tels que définis ci-dessus et plus spécifiquement b+c+d=1.

De manière spécifique, (a+b) peut être supérieur à 1, auquel cas l'oxyde lamellaire appartient à la catégorie des oxydes lamellaires surlithiés.

Un oxyde spécifique conforme à la définition des oxydes de formule (IV) susmentionnée est l'oxyde de formule (V) suivante (avec a= 1 et b=0,2) :

$$Li_{1,2}Ni_{0,2}Mn_{0,6}O_2 \qquad (V)$$

Comme mentionné ci-dessus, le procédé de l'invention comprend, dans un premier temps, une étape de synthèse d'un carbonate mixte ou d'un hydroxyde mixte comprenant les autres éléments que Li par mise en contact, sous agitation, des autres éléments que Li sous forme de cations avec des anions carbonates, lorsqu'il s'agit de synthétiser le carbonate mixte, ou avec des anions hydroxydes, lorsqu'il s'agit de synthétiser l'hydroxyde mixte et, ce dans des conditions de pH et de vitesse d'agitation spécifiques définies ci-dessus.

Par carbonate mixte comprenant les autres éléments que Li, on précise qu'il s'agit d'un composé comprenant un anion $CO_3^{2-}$ et des cations des autres éléments que Li (à savoir, les éléments présents dans l'oxyde hormis Li, qui est introduit subséquemment lors de l'étape b).

Par hydroxyde mixte comprenant les autres éléments que Li, on précise qu'il s'agit d'un composé comprenant un anion $OH^-$ et des cations des autres éléments que Li (à savoir, les éléments présents dans l'oxyde hormis Li, qui est introduit subséquemment lors de l'étape b).

Lorsqu'il est choisi de passer par la synthèse d'un carbonate mixte (dite également voie carbonate), l'étape a) consiste ainsi à mettre en contact, sous agitation, les autres éléments que Li sous forme de cations avec des anions carbonates.

Plus spécifiquement, les autres éléments que Li sous forme de cations peuvent être apportés *via* une solution comprenant des sulfates des autres éléments que Li (par exemple, du sulfate de nickel, du sulfate de manganèse, du sulfate de cobalt, du sulfate de M), tandis que les anions carbonates peuvent être apportés *via* une solution comprenant un carbonate de métal alcalin (tel que du carbonate de sodium $Na_2CO_3$). Pour atteindre les conditions de pH susmentionnées (à savoir, un pH allant de 8 à 9,5), il peut être envisageable de régler la quantité de carbonate de métal alcalin ajoutée, de sorte à ce qu'une partie de celui-ci contribue à la régulation du pH dans la gamme revendiquée.

Lorsqu'il est choisi de passer par la synthèse d'un hydroxyde mixte (dite également voie hydroxyde), l'étape a) consiste à mettre en contact, sous agitation, les autres éléments que Li sous forme de cations avec des anions hydroxydes.

Plus spécifiquement, les autres éléments que Li sous forme de cations peuvent être apportés *via* une solution comprenant des sulfates des autres éléments que Li (par exemple, du sulfate de nickel, du sulfate de manganèse, du sulfate de cobalt, du sulfate de M), tandis que les anions hydroxydes peuvent être apportés *via* une solution comprenant un hydroxyde de métal alcalin (tel que de la soude NaOH). Pour atteindre les conditions de pH susmentionnées (à savoir, un pH allant de 11 à 12,5), il peut être envisageable de régler la quantité d'hydroxyde de métal alcalin ajoutée, de sorte à ce qu'une partie de celui-ci contribue à la régulation du pH dans la gamme revendiquée.

Sans être lié par la théorie, l'étape de synthèse d'un carbonate mixte ou d'un hydroxyde mixte consiste en un mécanisme de coprécipitation des cations des autres éléments que Li avec les anions carbonates ou hydroxydes, moyennant quoi il résulte le carbonate mixte ou l'hydroxyde mixte.

Plus spécifiquement, l'étape de synthèse d'un carbonate mixte ou d'un hydroxyde mixte peut consister à coprécipiter sous agitation, en milieu basique, une solution de sulfates d'autres éléments que Li et une solution comprenant un carbonate de sel alcalin (par exemple, du carbonate de sodium) ou un hydroxyde de sel alcalin (par exemple, de l'hydroxyde de sodium).

Encore plus spécifiquement, l'étape de synthèse d'un carbonate mixte ou d'un hydroxyde mixte peut comprendre les opérations suivantes :

- une opération d'injection, dans un réacteur (par exemple, un réacteur du type CSTR) comprenant de l'eau, d'une solution de sulfates d'éléments autres que Li et d'une solution d'un carbonate (par exemple, un carbonate de métal alcalin) ou d'un hydroxyde (par exemple, un hydroxyde de métal alcalin) avec une vitesse d'agitation prédéterminée et à un pH prédéterminé tels que définis ci-dessus ;
- une opération de maintien de l'agitation du précipité formé pendant une durée appropriée pour la formation complète du carbonate mixte ou de l'hydroxyde mixte, toujours en maintenant la vitesse d'agitation prédéterminée et le pH prédéterminé susmentionnés ;
- une opération d'isolement du précipité suivie d'une opération de séchage, moyennant quoi il subsiste une poudre de carbonate mixte ou d'hydroxyde mixte.

Les conditions opératoires influentes sont le pH et vitesse d'agitation susmentionnés (ces conditions étant mentionnées ci-dessus par les expressions « pH prédéterminée et « vitesse d'agitation prédéterminée »).

Plus spécifiquement, l'étape a) est réalisée à une vitesse d'agitation fixée de sorte à obtenir une puissance dissipée par unité de volume au moins supérieure ou égale à 1000 $W/m^3$ et, de préférence, allant de 1000 à 15000 $W/m^3$ et, de préférence encore, allant de 2000 à 6000 $W/m^3$.

En outre, l'étape de synthèse d'un carbonate mixte ou d'un hydroxyde mixte peut être fixée à une température allant de 30 à 70°C, par exemple, une température de 50°C.

Enfin, la concentration de la solution comprenant les cations des autres éléments que Li peut aller de 0,8 à 3 M, par exemple, une concentration de 2 M.

Une fois le carbonate mixte ou l'hydroxyde mixte réalisé, celui-ci est mis à réagir avec un carbonate de lithium (lorsque l'étape a) concerne la synthèse d'un carbonate mixte) ou avec un hydroxyde de lithium (lorsque l'étape a) concerne la synthèse d'un hydroxyde mixte) dans des conditions suffisantes pour l'obtention d'un oxyde lamellaire lithié de formule (I) susmentionnée. En particulier, ces conditions sont classiquement une température associée à une durée appropriée nécessaires à l'obtention de l'oxyde lamellaire lithié. Ces conditions peuvent être déterminées par l'homme du métier par le biais d'essais préalables, l'obtention du produit voulu (ici, l'oxyde lamellaire surlithié) pouvant être détectée par diffraction aux rayons X.

De cette étape résultent des nanoparticules non agglomérées d'un oxyde lamellaire lithié.

L'invention a trait également à des nanoparticules non agglomérées susceptibles d'être obtenues par le procédé défini ci-dessus, lesdites nanoparticules étant dénuées de joints de grains.

Par « nanoparticules dénuées de joints de grains », on entend, dans ce qui précède et ce qui suit, des nanoparticules libres, c'est-à-dire des nanoparticules dont les grains ne sont pas associés entre eux par une interface formant jonction entre eux, le terme dénué couvrant l'absence totale de joints de grains ou une quantité de joints de grains ne dépassant pas 5% et, de préférence, ne dépassant pas 1%, l'absence de joints de grains ou à tout le moins la quantité infinitésimale mentionnée ci-dessus pouvant être détecté par microscopie électronique à balayage (MEB) ou par granulométrie laser (au moyen d'un appareil Zêta Sizer ZEN360 de chez Malvern Instruments) qui permet notamment de visualiser l'absence d'agglomérats par l'absence de pics correspondants.

Outre les avantages déjà mentionnés ci-dessus, l'absence de joints de grains ou à tout le moins la teneur infinitésimale exprimée ci-dessus permet une meilleure diffusion du lithium, laquelle diffusion est généralement freinée par la présence de joints de grains qui forment une barrière de diffusion.

Par ailleurs, les caractéristiques des nanoparticules évoquées dans le cadre de la description du procédé peuvent être reprises ici pour les compte des nanoparticules en tant que telles et notamment ce qui concerne la formule et sa définition et la taille des nanoparticules.

Comme évoqué ci-dessus, les nanoparticules non agglomérées obtenues par le procédé de l'invention peuvent être utilisées, comme matériau actif, d'une électrode positive pour batterie au lithium (en particulier, une batterie lithium-ion et, encore plus spécifiquement, une batterie lithium-ion à haute énergie).

Le fait que ce matériau se présente sous forme de nanoparticules peut permettre que l'électrode positive comprenant un tel matériau peut être réalisée par des techniques d'impression, sans engendrer, par exemple, un encrassage et une obturation des buses d'impression, tel que cela peut être le cas avec des particules de tailles plus importantes.

Les batteries au lithium, telles que les batteries lithium-ion, comprennent, classiquement, une cellule électrochimique comprenant un électrolyte disposé entre une électrode positive et une électrode négative, ladite électrode positive comprenant, comme matériau actif, des nanoparticules conformes à l'invention.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

L'électrode négative peut être, par exemple, du lithium sous forme métallique, ou bien peut être un matériau apte à insérer et désinsérer du lithium, tel qu'un matériau carboné comme du graphite, un matériau oxyde tel que $Li_4Ti_5O_{12}$ ou un composé apte à former alliage avec du lithium, tel que du silicium ou de l'étain.

L'électrode positive, quant à elle, peut comprendre, outre le matériau conforme à l'invention, un liant et un additif conducteur électronique, tel que du carbone.

L'électrolyte, quant à lui, peut comprendre, en général, un sel de lithium, par exemple, choisi parmi $LiClO_4$, $LiAsF_6$, $LiPF_6$, $LiBF_4$, $LiRfSO_3$, $LiCH_3SO_3$, $LiN(RfSO_2)_2$, Rf étant choisi F ou un groupe perfluoroalkyle comportant de 1 à 8 atomes de carbone, du trifluorométhanesulfonylimide de lithium (connu sous l'abréviation LiTfSI), du bis(oxalato)borate de lithium (connu sous l'abréviation LiBOB), du bis(perfluoréthylsulfonyl)imide de lithium (également connu sous l'abréviation LiBETI), du fluoroalkylphosphate de lithium (connu sous l'abréviation LiFAP).

Le sel de lithium est, de préférence, dissous dans un solvant polaire aprotique.

En outre, l'électrolyte peut être amené à imbiber un élément séparateur disposé entre les deux électrodes de l'accumulateur.

Dans le cas d'une batterie au lithium comprenant un électrolyte polymère, le sel de lithium n'est pas dissous dans un solvant organique, mais dans un composite polymère solide, tel que le polyoxyde d'éthylène (connu sous l'abréviation POE), le polyacrylonitrile (connu sous l'abréviation PAN), le polyméthacrylate de méthyle (connu sou l'abréviation PMMA), le polyfluorure de vinylidène (connu sous l'abréviation PVDF), le polychlorure de vinylidène (connu sous l'abréviation PVC) ou un de leurs dérivés.

D'autres caractéristiques apparaîtront mieux à la lecture du complément de description qui suit, lequel se rapporte à des exemples de fabrication de matériaux conformes à l'invention.

Bien entendu, les exemples qui suivent ne sont donnés qu'à titre d'illustration de l'objet de l'invention et ne constituent, en aucun cas, une limitation de cet objet.

**BREVE DESCRIPTION DES FIGURES**

La figure 1 est un graphique représentant l'évolution de la capacité spécifique C (en mAh/g) d'un matériau préparé conformément à l'invention en fonction du nombre de cycles N (Exemple 1).

La figure 2 est un graphique représentant l'évolution de la capacité spécifique C (en mAh/g) en fonction du nombre de cycles N d'un matériau préparé conformément à l'invention (Exemple 2).

**EXPOSÉ DÉTAILLÉ DE MODES DE RÉALISATION PARTICULIERS**

<u>EXEMPLE COMPARATIF 1</u>

Cet exemple illustre la synthèse d'un oxyde lamellaire surlithié de formule $Li_{1,2}Ni_{0,2}Mn_{0,6}O_2$ par coprécipitation en voie carbonate, ladite synthèse comprenant la préparation d'un carbonate mixte de nickel et de manganèse puis la réaction de ce carbonate mixte avec un carbonate de lithium, les conditions de synthèse étant non conformes à celles du procédé de l'invention.

Pour ce faire, dans un premier temps, une solution de sulfate de manganèse et de nickel est préparée par dissolution, dans 250 mL d'eau, de sulfate de nickel NiSO$_4$*6H$_2$O (33,2 g) et de sulfate de manganèse MnSO$_4$*H$_2$O (64,0 g).

En parallèle, une autre solution est préparée par dissolution de carbonate de sodium Na$_2$CO$_3$ (63,6 g) dans de l'eau (281,2 g) puis ajout d'ammoniaque (solution à 28%) (15 g).

Dans un réacteur de type CSTR, on introduit 500 mL d'eau et on la chauffe à 50°C. Puis, la solution de sulfate de nickel et de sulfate de manganèse est injectée en continu dans le réacteur. Le pH du réacteur est régulé à 7,5 en ajoutant l'autre solution. Pendant toute la durée de synthèse (soit 8 heures), la vitesse d'agitation dans le réacteur est maintenue à 100 tours/minute, soit 2,0 W/m$^3$.

A l'issue de la durée de synthèse, le carbonate mixte ainsi obtenu et qui a précipité dans le réacteur est soumis à une centrifugation et est mis à sécher sous vide durant une nuit.

Ensuite, il est prélevé 5 g dudit carbonate mixte pour le mettre en contact avec du carbonate de lithium Li$_2$CO$_3$ (2,47 g). L'ensemble est soumis à une calcination (900°C pendant 24 heures), à l'issue de laquelle est obtenue une poudre du matériau de formule Li$_{1,2}$Ni$_{0,2}$Mn$_{0,6}$O$_2$ confirmée par diffraction des rayons X.

La poudre est aussi analysée par microscopie à balayage. Dans les conditions opératoires notamment en termes de pH et de vitesse d'agitation, il ressort que la poudre est constituée de particules secondaires denses et sphériques d'environ 5 μm, lesquelles particules secondaires sont constituées par l'agglomération de particules primaires d'un diamètre moyen compris entre 100 et 200 nm fortement agglomérées entre elles.

## EXEMPLE 1

Cet exemple illustre la synthèse d'un oxyde lamellaire surlithié de formule Li$_{1,2}$Ni$_{0,2}$Mn$_{0,6}$O$_2$ (avec a=1 et b=0,2) par coprécipitation en voie carbonate conformément au procédé de l'invention, ladite synthèse comprenant la préparation d'un carbonate mixte de nickel et de manganèse puis la réaction de ce carbonate mixte avec un carbonate de lithium.

Les conditions opératoires sont similaires à celles de l'exemple comparatif 1, si ce n'est le pH, qui est fixé à 8,5 et la vitesse d'agitation, qui est fixée à 500 tours/minute, soit environ 1300 W/m$^3$.

Il est obtenu une poudre du matériau de formule Li$_{1,2}$Ni$_{0,2}$Mn$_{0,6}$O$_2$ confirmée par diffraction des rayons X.

La poudre est aussi analysée par microscopie à balayage. Dans les conditions opératoires notamment en termes de pH et de vitesse d'agitation, il ressort que la poudre est constituée de particules non agglomérées présentant un diamètre moyen en nombre de 200 à 400 nm.

Les performances électrochimiques du matériau obtenu ont également été testées.

Pour ce faire, il est a été élaboré, à partir de la poudre obtenue, une pile-bouton comprenant les éléments suivants :

- une électrode positive circulaire de diamètre 14 mm constituée d'un collecteur de courant en aluminium dont la face supérieure est recouverte d'un mélange composé de poudre Li$_{1,2}$Ni$_{0,2}$Mn$_{0,6}$O$_2$ (80 % massique), de 10% massique de polyfluorure de vinylidène (PVDF) et de 10% massique d'additif conducteur carboné;
- une électrode négative de diamètre 14 mm constituée d'une feuille en lithium métallique ;
- entre ladite électrode positive et ladite électrode négative, un séparateur imbibé d'un électrolyte LP 100 (1 mol/L de LiPF$_6$ dans un mélange EC/PC/DMC selon un rapport volumique 1/1/3), EC correspondant à du carbonate d'éthylène, PC à du carbonate de propylène et DMC à du carbonate de diméthyle.

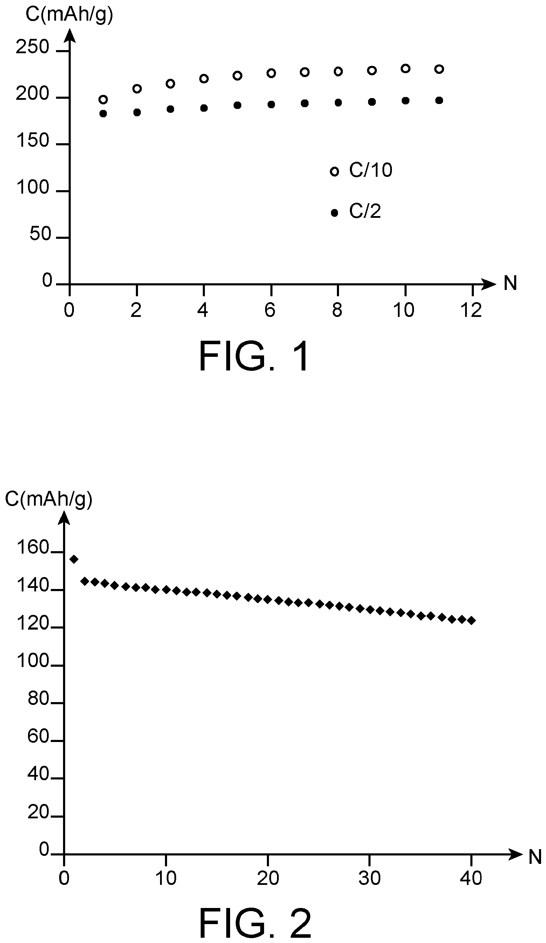

La pile ainsi préparée subit une séquence de cyclage (11 cycles) selon un régime C/10 et C/2 et il est déterminé l'évolution de capacité (en mAh/g) en fonction du nombre de cycles N, les résultats étant reportés sur la figure 1.

Plus de 230 mAh/h sont obtenues à C/10 et 200 mAh/g sont obtenues à C/2.

## EXEMPLE COMPARATIF 2

Cet exemple illustre la synthèse d'un oxyde lamellaire surlithié de formule LiNi$_{1/3}$Mn$_{1/3}$Co$_{1/3}$O$_2$ par coprécipitation en voie hydroxyde, ladite synthèse comprenant la préparation d'un hydroxyde mixte de nickel, de cobalt et de manganèse puis la réaction de cet hydroxyde mixte avec un hydroxyde de lithium, les conditions de synthèse étant non conformes à celles du procédé de l'invention.

Pour ce faire, dans un premier temps, une première solution est préparée, par dissolution dans 400 mL d'eau, de sulfate de nickel NiSO$_4$*6H$_2$O (70,8 g), de sulfate de manganèse MnSO$_4$*H$_2$O (45,5 g) et de sulfate de cobalt CoSO$_4$*7H$_2$O (75,7 g).

En parallèle, une autre solution est préparée par dissolution d'hydroxyde de sodium (64,0 g) dans de l'eau (299,9 g) puis ajout d'ammoniaque (solution à 28%) (80,1 g).

Dans un réacteur de type CSTR, on introduit 1000 mL d'eau et on la chauffe à 50°C. Puis, la première solution est injectée en continu dans le réacteur. Le pH du réacteur est régulé à 10,5 en ajoutant l'autre solution. Pendant toute la durée de synthèse (soit 8 heures), la vitesse d'agitation dans le réacteur est maintenue à 700 tours/minute, soit environ 3500 W/m$^3$.

A l'issue de la durée de synthèse, l'hydroxyde mixte ainsi obtenu et qui a précipité dans le réacteur est soumis à une centrifugation et est mis à sécher sous vide durant une nuit.

Ensuite, il est prélevé 5 g dudit hydroxyde mixte pour le mettre en contact avec de l'hydroxyde de lithium (2,37 g). L'ensemble est soumis à une calcination (850°C pendant 24 heures), à l'issue de laquelle est obtenue une poudre du matériau de formule $LiNi_{1/3}Mn_{1/3}Co_{1/3}O_2$ confirmée par diffraction des rayons X.

La poudre est aussi analysée par microscopie à balayage. Dans les conditions opératoires notamment en termes de pH et de vitesse d'agitation, il ressort que la poudre est constituée de particules secondaires denses et larges, lesquelles particules secondaires sont constituées par l'agglomération de particules primaires d'une centaine de nanomètres.

## EXEMPLE 2

Cet exemple illustre la synthèse d'un oxyde lamellaire lithié de formule $LiNi_{1/3}Mn_{1/3}Co_{1/3}O_2$ (avec a=1 et b=0) par coprécipitation en voie hydroxyde conformément au procédé de l'invention, ladite synthèse comprenant la préparation d'un hydroxyde mixte de nickel, de cobalt et de manganèse puis la réaction de cet hydroxyde mixte avec un hydroxyde de lithium.

Les conditions opératoires sont similaires à celles de l'exemple comparatif 2, si ce n'est le pH, qui est fixé à 11,5, la vitesse d'agitation, qui est fixée à 800 tours/minute (soit environ 5000 W/m$^3$) et la quantité d'ammoniaque utilisée (solution à 28%) utilisée est de 40 g.

Il est obtenu une poudre du matériau de formule $LiNi_{1/3}Mn_{1/3}Co_{1/3}O_2$ confirmée par diffraction des rayons X.

La poudre est aussi analysée par microscopie à balayage. Dans les conditions opératoires notamment en termes de pH et de vitesse d'agitation, il ressort que la poudre est constituée de particules non agglomérées présentant un diamètre moyen en nombre de 200 nm. Ce résultat est confirmé par une analyse granulométrique effectuée par spectroscopie acoustique.

Les performances électrochimiques du matériau obtenu ont également été testées.

Pour ce faire, il est a été élaboré, à partir de la poudre obtenue, une pile-bouton comprenant les éléments suivants :

- une électrode positive circulaire de diamètre 14 mm constituée d'un collecteur de courant en aluminium dont la face supérieure est recouverte d'un mélange composé de poudre $LiNi_{1/3}Mn_{1/3}Co_{1/3}O_2$ (80% massique), de 10% massique de PVDF et de 10% massique d'additif conducteur carboné;
- une électrode négative de diamètre 14 mm constituée d'une feuille en lithium métallique ;
- entre ladite électrode positive et ladite électrode négative, un séparateur imbibé d'un électrolyte LP 100 (1 mol/L de $LiPF_6$ dans un mélange EC/PC/DMC selon un rapport volumique 1/1/3), EC correspondant à du carbonate d'éthylène, PC à du carbonate de propylène et DMC à du carbonate de diméthyle.

La pile ainsi préparée subit une séquence de cyclage (40 cycles) selon le régime suivant : 1 cycle à C/10 puis cyclage à 1C et il est déterminé l'évolution de capacité (en mAh/g) en fonction du nombre de cycles, les résultats étant reportés sur la figure 2.

Aussi, le matériau obtenu selon cet exemple constitue un excellent candidat pour des applications nécessitant des matériaux d'électrode positive à haute énergie présentant une taille nanométrique.

## Revendications

1. Procédé de préparation de nanoparticules non agglomérées d'un oxyde lamellaire lithié comprenant un ou plusieurs éléments métalliques disposés sous forme de feuillets de cations métalliques et du lithium disposé dans des interfeuillets de cations lithium et éventuellement, en partie, dans les feuillets de cations métalliques, lesdits interfeuillets assurant la séparation entre lesdits feuillets, ledit oxyde répondant à la formule (I) suivante :

$$Li_{(a+b)}Ni_cMn_dCo_eM_fO_g \qquad (I)$$

dans laquelle :

*a représente la proportion de lithium compris dans les interfeuillets et étant supérieur à 0 et inférieur ou égal à 1 ;

*b représente la proportion de lithium compris dans les feuillets de cations métalliques et étant supérieur ou égal à 0 et inférieur ou égal à (1/3) ;

*c, d, e et f sont compris entre 0 et 1, avec la condition que b+c+d+e+f=1, de sorte à ce que l'électroneutralité de l'oxyde de formule (I) soit respectée ;

*g est compris entre 1,9 et 2,1 ;

*lorsque f est différent 0, M est au moins un élément choisi parmi Al, Fe, Ti, Cr, V, Cu, Mg, Zn, Na, K, Ca, Sc et les combinaisons de ceux-ci ;

ledit procédé comprenant les étapes suivantes :

a) une étape de synthèse d'un carbonate mixte ou d'un hydroxyde mixte comprenant les autres éléments que Li par mise en contact, sous agitation, des autres éléments que Li sous forme de cations avec des anions carbonates, lorsqu'il s'agit de synthétiser le carbonate mixte, ou avec des anions hydroxydes, lorsqu'il s'agit de synthétiser l'hydroxyde mixte ;

b) une étape de réaction du carbonate mixte ou de l'hydroxyde mixte obtenu à l'étape a) avec un carbonate de lithium ou hydroxyde de lithium, moyennant quoi il se forme l'oxyde lamellaire lithié de formule (I) susmentionnée,

**caractérisé en ce que** l'étape a) est réalisée à un pH prédéterminé, lequel pH va de 8 à 9,5 lorsque l'étape de synthèse concerne un carbonate mixte ou va de 11 à 12,5 lorsque l'étape de synthèse concerne un hydroxyde mixte et **en ce que** l'étape a) est réalisée à une vitesse d'agitation fixée de sorte à obtenir une puissance dissipée par unité de volume au moins supérieure ou égale à 1000 W/m$^3$.

2. Procédé selon la revendication 1, dans lequel f est égal à 0, auquel cas l'oxyde lamellaire lithié répond à la formule (II) suivante :

$$Li_{(a+b)}Ni_cMn_dCo_eO_g \qquad (II)$$

avec a, b, c, d, e et g étant tels que définis à la revendication 1.

3. Procédé selon la revendication 1, dans lequel e est égal à 0 et f est égal à 0, auquel cas l'oxyde lamellaire lithié répond à la formule (IV) suivante :

$$Li_{(a+b)}Ni_cMn_dO_g \qquad (IV)$$

avec a, b, c, d et g étant tels que définis à la revendication 1.

4. Procédé selon l'une quelconque des revendications précédentes, dans lequel (a+b) est supérieur à 1, auquel cas l'oxyde lamellaire appartient à la catégorie des oxydes lamellaires surlithiés.

5. Procédé selon l'une quelconque des revendications précédentes, dans lequel, lorsque l'étape a) concerne la synthèse d'un carbonate mixte, les autres éléments que Li sous forme de cations sont apportés *via* une solution comprenant des sulfates des autres éléments que Li, tandis que les anions carbonates sont apportés *via* une solution comprenant un carbonate de métal alcalin.

6. Procédé selon l'une quelconque des revendications 1 à 4, dans lequel, lorsque l'étape a) concerne la synthèse d'un hydroxyde mixte, les autres éléments que Li sous forme de cations sont apportés *via* une solution comprenant des sulfates des autres éléments que Li, tandis que les anions hydroxydes sont apportés *via* une solution comprenant un hydroxyde de métal alcalin.

7. Procédé selon l'une quelconque des revendications précédentes, dans lequel l'étape de synthèse d'un carbonate mixte ou d'un hydroxyde mixte comprendre les opérations suivantes :

- une opération d'injection, dans un réacteur comprenant de l'eau, d'une solution de sulfates d'éléments autres que Li et d'une solution d'un carbonate ou d'un hydroxyde avec une vitesse d'agitation prédéterminée et à un pH prédéterminé tels que définis à la revendication 1 ;

- une opération de maintien de l'agitation du précipité formé pendant une durée appropriée pour la formation complète du carbonate mixte ou de l'hydroxyde mixte, toujours en maintenant la vitesse d'agitation prédéterminée et le pH prédéterminé tels que définis à la revendication 1 ;

- une opération d'isolement du précipité suivie d'une opération de séchage, moyennant quoi il subsiste une poudre de carbonate mixte ou d'hydroxyde mixte.

**Patentansprüche**

1. Verfahren zur Herstellung von nicht-agglomerierten Nanopartikeln aus einem lithiumhaltigen Lamellenoxid, umfassend ein oder mehrere Metallelemente, die in Form von Schichten aus Metallkationen angeordnet sind, und Lithium, das in Zwischenschichten aus Lithiumkationen und gegebenenfalls teilweise in den Schichten aus Metallkationen angeordnet ist, wobei die Zwischenschichten die Trennung zwischen den Schichten gewährleisten, wobei das Oxid die folgende Formel (I) aufweist:

$$Li_{(a+b)}Ni_cMn_dCo_eM_fO_g \qquad (I)$$

wobei:

*a für den Anteil an Lithium steht, der in den Zwischenschichten enthalten ist und größer als 0 und kleiner als oder gleich 1 ist;
*b für den Anteil an Lithium steht, der in den Schichten aus Metallkationen enthalten ist und größer als oder gleich 0 und kleiner als oder gleich (1/3) ist;
*c, d, e und f zwischen 0 und 1 liegen, unter der Bedingung, dass b+c+d+e+f=1 ist, so dass die Elektroneutralität des Oxids der Formel (I) eingehalten wird;
*g zwischen 1,9 und 2,1 liegt;
*es sich bei M, wenn f von 0 verschieden ist, um mindestens ein Element handelt ausgewählt aus Al, Fe, Ti, Cr, V, Cu, Mg, Zn, Na, K, Ca, Sc und Kombinationen davon;
wobei das Verfahren die folgenden Schritte umfasst:

a) einen Schritt der Synthese eines gemischten Carbonats oder eines gemischten Hydroxids, umfassend die anderen Elemente als Li, durch Inkontaktbringen unter Rühren der anderen Elemente als Li in Form von Kationen mit Carbonatanionen, wenn es sich um das Synthesieren des gemischten Carbonats handelt, oder mit Hydroxidanionen, wenn es sich um das Synthesieren des gemischten Hydroxids handelt;
b) einen Schritt des Umsetzens des in Schritt a) erhaltenen gemischten Carbonats oder gemischen Hydroxids mit einem Lithiumcarbonat oder Lithiumhydroxid, wodurch das lithiumhaltige Lamellenoxid der oben erwähnten Formel (I) gebildet wird,

**dadurch gekennzeichnet, dass** Schritt a) bei einem vorher festgelegten pH-Wert durchgeführt wird, wobei der pH-Wert 8 bis 9,5 beträgt, wenn der Syntheseschritt ein gemischtes Carbonat betrifft, oder 11 bis 12,5 beträgt, wenn der Syntheseschritt ein gemischtes Hydroxid betrifft, und dadurch, dass Schritt a) bei einer Rührgeschwindigkeit durchgeführt wird, die so festgelegt ist, dass eine Verlustleistung pro Volumeneinheit von mindestens 1000 W/m$^3$ oder mehr erzielt wird.

2. Verfahren nach Anspruch 1, wobei f gleich 0 ist, in welchem Fall das lithiumhaltige Lamellenoxid der folgenden Formel (II) entspricht:

$$Li_{(a+b)}Ni_cMn_dCo_eO_g \qquad (II)$$

wobei a, b, c, d, e und g so sind, wie in Anspruch 1 definiert.

3. Verfahren nach Anspruch 1, wobei e gleich 0 ist und f gleich 0 ist, in welchem Fall das lithiumhaltige Lamellenoxid derfolgenden Formel (IV) entspricht:

$$Li_{(a+b)}Ni_cMn_dO_g \qquad (IV)$$

wobei a, b, c, d und g so sind, wie in Anspruch 1 definiert.

4. Verfahren nach einem der vorhergehenden Ansprüche, wobei (a+b) größer als 1 ist, in welchem Fall das Lamellenoxid zur Kategorie der überlithiierten Lamellenoxide gehört.

**5.** Verfahren nach einem der vorhergehenden Ansprüche, wobei, wenn sich Schritt a) auf die Synthese eines gemischen Carbonats bezieht, die anderen Elemente außer Li in Form von Kationen über eine Lösung zugeführt werden, die Sulfate der anderen Elemente außer Li umfasst, während die Carbonatanionen über eine Lösung zugeführt werden, die ein Alkalimetallcarbonat umfasst.

**6.** Verfahren nach einem der Ansprüche 1 bis 4, wobei, wenn sich Schritt a) auf die Synthese eines gemischten Hydroxids bezieht, die anderen Elemente als Li in Form von Kationen über eine Lösung zugeführt werden, die Sulfate der anderen Elemente als Li umfasst, während die Hydroxidanionen über eine Lösung zugeführt werden, die ein Alkalimetallhydroxid umfasst.

**7.** Verfahren nach einem der vorhergehenden Ansprüche, wobei der Schritt der Synthese eines gemischten Carbonats oder eines gemischten Hydroxids die folgenden Vorgänge umfasst:

- einen Schritt des Einspritzens einer Lösung von Sulfaten von anderen Elementen als Li und einer Lösung eines Carbonats oder Hydroxids mit einer vorher festgelegten Rührgeschwindigkeit und bei einem vorher festgelegten pH-Wert, wie in Anspruch 1 definiert, in einen Reaktor, der Wasser enthält;
- einen Schritt des Aufrechterhaltens des Rührens des gebildeten Niederschlags für eine Zeitdauer, die für die vollständige Bildung des gemischten Carbonats oder Hydroxids geeignet ist, immer noch unter Aufrechterhaltung der vorher festgelegten Rührgeschwindigkeit und des vorher festgelegten pH-Werts, wie in Anspruch 1 definiert;
- einen Schritt der Isolierung des Niederschlags, gefolgt von einem Trocknungsschritt, wobei ein Pulver aus Mischkarbonat oder Mischhydroxid zurückbleibt.

## Claims

**1.** A method for preparing non-agglomerated nanoparticles of a lithium lamellar oxide comprising one or more metal elements disposed in the form of layers of metal cations and lithium disposed in interlayers of lithium cations and optionally, partially, in the layers of metal cations, said interlayers ensuring the separation between said layers, said oxide corresponding to the following formula (I):

$$Li_{(a+b)}Ni_cMn_dCo_eM_fO_g \qquad (I)$$

wherein:

*a represents the proportion of lithium comprised in the interlayers and being greater than 0 and less than or equal to 1;
*b represents the proportion of lithium comprised in the layers of metal cations and being greater than or equal to 0 and less than or equal to (1/3);
*c, d, e and f are comprised between 0 and 1, with the condition that b+c+d+e+f=1, so that the electroneutrality of the oxide of formula (I) is respected;
*g is comprised between 1.9 and 2.1;
*when f is different from 0, M is at least one element selected from Al, Fe, Ti, Cr, V, Cu, Mg, Zn, Na, K, Ca, Sc and combinations thereof;
said method comprising the following steps:

a) a step of synthesising a mixed carbonate or a mixed hydroxide comprising the elements other than Li by contacting, with stirring, the elements other than Li in the form of cations with carbonate anions, when it comes to synthesising the mixed carbonate, or with hydroxide anions, when it comes to synthesising the mixed hydroxide;
b) a step of reacting the mixed carbonate or the mixed hydroxide obtained in step a) with a lithium carbonate or lithium hydroxide, whereby the aforementioned lithium lamellar oxide of formula (I) is formed,

**characterised in that** step a) is carried out at a predetermined pH, which pH ranges from 8 to 9.5 when the synthesis step relates to a mixed carbonate or ranges from 11 to 12.5 when the synthesis step relates to a mixed hydroxide and **in that** step a) is carried out at a fixed stirring speed so as to obtain a power dissipated per unit volume which is at least greater than or equal to 1000 $W/m^3$.

2. The method according to claim 1, wherein f is equal to 0, in which case the lithium lamellar oxide corresponds to the following formula (II):

$$Li_{(a+b)}Ni_cMn_dCo_eO_g \qquad (II)$$

with a, b, c, d, e and g being as defined in claim 1.

3. The method according to claim 1, wherein e is equal to 0 and f is equal to 0, in which case the lithium lamellar oxide corresponds to the following formula (IV):

$$Li_{(a+b)}Ni_cMn_dO_g \qquad (IV)$$

with a, b, c, d and g being as defined in claim 1.

4. The method according to any one of the preceding claims, wherein (a+b) is greater than 1, in which case the lamellar oxide belongs to the category of lamellar oxides containing extra lithium.

5. The method according to any one of the preceding claims, wherein, when step a) relates to the synthesis of a mixed carbonate, the elements other than Li in the form of cations are provided *via* a solution comprising sulphates of the elements other than Li, while the carbonate anions are provided *via* a solution comprising an alkali metal carbonate.

6. The method according to any one of claims 1 to 4, wherein, when step a) relates to the synthesis of a mixed hydroxide, the elements other than Li in the form of cations are provided *via* a solution comprising sulphates of the elements other than Li, while the hydroxide anions are provided *via* a solution comprising an alkali metal hydroxide.

7. The method according to any one of the preceding claims, wherein the step of synthesising a mixed carbonate or a mixed hydroxide comprises the following operations:

- an operation of injecting, into a reactor comprising water, a solution of sulphates of elements other than Li and a solution of a carbonate or a hydroxide with a predetermined stirring speed and at a predetermined pH as defined in claim 1;
- an operation of maintaining the stirring of the precipitate formed for a period appropriate for the complete formation of the mixed carbonate or the mixed hydroxide, always by maintaining the predetermined stirring speed and the predetermined pH as defined in claim 1;
- an operation of isolating the precipitate followed by a drying operation, whereby a powder of mixed carbonate or mixed hydroxide remains.

C(mAh/g)

**FIG. 1**

C(mAh/g)

**FIG. 2**

## RÉFÉRENCES CITÉES DANS LA DESCRIPTION

**Documents brevets cités dans la description**

- US 2013146808 A
- FR 3009134
- WO 2016075533 A

**Littérature non-brevet citée dans la description**

- *Materials Chemistry and Physics,* 2012, vol. 134, 254-259
- *Journal of Power Sources,* 2007, vol. 163, 1053-1058
- *Journal of Power Sources,* 2009, vol. 189, 248-255
- **COGNART et al.** *Agitation, Mélange-Aspects mécaniques-Techniques de l'Ingénieur*
- **ROUSTAN et al.** *Agitation, Mélange-Concepts Théoriques de base-Techniques de l'Ingénieur-Réf*